# EUROPÄISCHE PATENTSCHRIFT

(11) **EP 3 613 972 B1**
(45) Veröffentlichungstag und Bekanntmachung des Hinweises auf die Patenterteilung: **07.07.2021**
(21) Anmeldenummer: 18465559.5
(22) Anmeldetag: 21.08.2018
(51) Int. Cl.: F02D 11/10, H02K 5/22, H02K 11/33

(54) **ANTRIEBSEINHEIT FÜR EINEN AKTUATOR**
DRIVE UNIT FOR AN ACTUATOR
UNITÉ D'ENTRAÎNEMENT POUR UN ACTIONNEUR

(43) Veröffentlichungstag der Anmeldung: 26.02.2020
(73) Patentinhaber: Vitesco Technologies GmbH, 30165 Hannover (DE)
(72) Erfinder: Petca, Ovidiu Claudiu, 300245 Timisoara (RO)

(56) Entgegenhaltungen:
- EP-A1- 1 167 724
- EP-A1- 1 660 763
- WO-A1-2016/009133
- DE-A1- 19 525 510
- US-A1- 2006 166 519

## Beschreibung

Die Erfindung betrifft eine Antriebseinheit für einen Aktuator, insbesondere einen Aktuator für die Betätigung einer Drosselklappe einer Verbrennungskraftmaschine, bevorzugt für ein Kraftfahrzeug. Der Aktuator kann auch ein Hydrostataktuator sein, bei dem ein elektrischer Motor einen Geberzylinder ansteuert, der über eine hydraulische Strecke einen Nehmerzylinder betätigt.

Die Antriebseinheit umfasst ein Motormodul mit einem elektrischen Antrieb und ein Steuerungsmodul. Der elektrische Motor umfasst z. B. einen Rotor und einen Stator, wobei die Bestromung des Stators über das Steuerungsmodul erfolgt. Aktuatoren dienen in Kraftfahrzeugen der mechanischen Verlagerung von Bauteilen.

Aus der DE 103 27 045 A1 ist ein Aktuator zur Betätigung einer Drosselklappe bekannt.

Es ist bekannt, beispielsweise aus WO 2016 009133 A1 oder EP 1 660 763 B1, die Leistungselektronik eines leistungsfähigen Steuerungsmoduls einer Antriebseinheit für einen Aktuator im Kraftfahrzeug-Bereich zusammen mit dem Motormodul in einem Gehäuse zu integrieren, bei dem z. B. ein Stecker als ein Teil des Gehäuses ausgeführt ist. Beide Module, nämlich das Steuerungsmodul und das Motormodul ergeben jeweils eine Unterzusammenbaugruppe (UZSB), die zu der Antriebseinheit des Aktuators verbunden werden können.

Dabei ist bekannt, dass beim Fügen von Gehäuseteilen (in dem einen Teil ist das Steuerungsmodul und in dem anderen das Motormodul angeordnet) eine elektrische Verbindung zwischen Motormodul und Steuerungsmodul hergestellt wird. Dabei wird die mindestens eine Verbindung (z. B. für jede Phase eines mehrphasigen Wechselstroms) durch einen Stift und auf der gegenüberliegenden Seite durch eine gabelförmige Stiftaufnahme gebildet. Im Zuge des Zusammenführens der Gehäuseteile wird der Stift in die Stiftaufnahme eingeführt. Stift und Stiftaufnahme bilden dabei regelmäßig eine kraftschlüssige Verbindung.

Die nur kraftschlüssige Verbindung von Stift und Stiftaufnahme führt regelmäßig über Laufzeit des Aktuators zu Problemen aufgrund loser Kontaktstellen.

Die Bauform des Aktuators ist aufgrund der fluchtenden Anordnung von Stift und Stiftaufnahme entlang einer axialen Richtung engen gestalterischen Grenzen unterworfen.

Aufgabe der vorliegenden Erfindung ist es, die mit Bezug auf den Stand der Technik angeführten Probleme zumindest teilweise zu lösen. Insbesondere soll eine Antriebseinheit mit einer elektrischen Verbindung vorgeschlagen werden, bei der eine sichere elektrische Kontaktierung zwischen Motormodul und Steuerungsmodul über Laufzeit gewährleistet werden kann. Weiter soll die Antriebseinheit mehr konstruktive Freiheit ermöglichen.

Zur Lösung dieser Aufgaben trägt eine Antriebseinheit mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden, wie in den beigefügten Ansprüchen definiert.

Die Erfindung betrifft eine Antriebseinheit für einen Aktuator, zumindest umfassend ein Motormodul und ein Steuerungsmodul. Das Motormodul weist zumindest einen elektrischen Antrieb, z.B. mit einem Stator und einem Rotor, auf. Das Steuerungsmodul weist zumindest eine Leistungskomponente zur Steuerung des Antriebs auf.

Das Motormodul und das Steuerungsmodul sind zumindest über mindestens eine elektrische leitende erste Verbindung (insbesondere zusätzlich über mindestens eine zweite Verbindung) miteinander verbunden. Die erste Verbindung ist durch einen ersten Motormodulstift und einen ersten Steuerungsmodulstift sowie ein den ersten Motormodulstift mit dem ersten Steuerungsmodulstift elektrisch leitend verbindendes, einteiliges erstes Verbindungselement gebildet. Der erste Motormodulstift erstreckt sich ausgehend von einer Anbindung am Motormodul entlang einer ersten axialen Richtung bis zu einem ersten Motormodulstiftende. Der erste Steuerungsmodulstift erstreckt sich von einer Anbindung am Steuerungsmodul entlang der ersten axialen Richtung bis zu einem ersten Steuerungsmodulstiftende. Das erste Verbindungselement erstreckt sich zur Verbindung der Stifte zumindest entlang einer radialen Richtung, quer zur ersten axialen Richtung. Zumindest einer der Stifte ist über ein elastisch verformbares Kontaktelement mit dem ersten Verbindungselement elektrisch leitend und kraftschlüssig verbunden, wobei die kraftschlüssige Verbindung gegenüber einer Verschiebung entlang der axialen Richtung wirkt. Zudem ist zumindest einer der Stifte über eine stoffschlüssige Verbindung mit dem ersten Verbindungselement elektrisch leitend verbunden.

Insbesondere wird vorgeschlagen, dass der Steuerungsmodulstift und der Motormodulstift in der radialen Richtung nebeneinander angeordnet sind. Insbesondere sind auch Motormodul und Steuerungsmodul in der radialen Richtung (unmittelbar) nebeneinander, bevorzugt in einem gemeinsamen Gehäuse(-teil) angeordnet. Die Stifte (Steuerungsmodulstift und Motormodulstift) erstrecken sich im Wesentlichen parallel zueinander und ausgehend von der jeweiligen Anbindung entlang der gleichen ersten axialen Richtung zu dem jeweiligen Stiftende (Motormodulstiftende und Steuerungsmodulstiftende).

Die Stifte der elektrischen ersten Verbindung sind in der radialen Richtung insbesondere beabstandet voneinander angeordnet. Dieser Abstand wird durch das erste Verbindungselement überbrückt.

Das erste Verbindungselement kontaktiert elektrisch leitend den Steuerungsmodulstift und den Motormodulstift und bildet so die elektrisch leitende erste Verbindung.

Das erste Verbindungselement ist insbesondere einteilig ausgeführt, besteht also aus einem einzigen Bauteil, das durchgehend stoffschlüssig ausgeführt ist.

Selbstverständlich kann die hier beschriebene elektrisch leitende erste Verbindung auch zwischen anderen Komponenten (als dem Steuerungsmodul und dem Motormodul) hergestellt werden. Wesentlich ist dabei, dass zwei nebeneinander angeordnete Komponenten Kontaktstifte aufweisen, die zueinander im Wesentlichen parallel, aber beabstandet voneinander, angeordnet sind, wobei der Abstand der Kontaktstifte über das erste Verbindungselement überbrückt wird.

Insbesondere ist das erste Verbindungselement zur Herstellung der ersten Verbindung entlang einer zweiten axialen Richtung (verläuft entgegengesetzt zur ersten axialen Richtung) auf die Stifte aufschiebbar.

Bevorzugt sind beide Stifte jeweils über ein elastisch verformbares Kontaktelement mit dem ersten Verbindungselement elektrisch leitend und kraftschlüssig verbunden.

Kraftschlüssige Verbindungen setzen eine Normal-Kraft auf die miteinander zu verbindenden Flächen voraus. Ihre gegenseitige Verschiebung ist verhindert, solange die durch die Haftreibung bewirkte Gegen-Kraft nicht überschritten wird. Der Kraftbeziehungsweise Reibschluss ist verloren und die Flächen rutschen aufeinander, wenn die tangential wirkende Last-Kraft größer als die Haftreibungs-Kraft ist.

Bevorzugt weist das erste Verbindungselement das Kontaktelement (insbesondere zwei Kontaktelemente, jeweils eines für jeden Stift) auf.

Insbesondere ist das erste Verbindungselement (zumindest) gegenüber der radialen Richtung formschlüssig mit beiden Stiften verbunden.

Formschlüssige Verbindungen entstehen durch das Ineinandergreifen von mindestens zwei Verbindungspartnern. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg.

Insbesondere wirkt die kraftschlüssige Verbindung gegenüber einer Verschiebung entlang der axialen Richtung. Insbesondere wirkt die formschlüssige Verbindung gegenüber der (jeder) radialen Richtung.

Bevorzugt sind beide Stifte über eine stoffschlüssige Verbindung mit dem ersten Verbindungselement elektrisch leitend verbunden.

Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen (z. B. Verbindung durch Löten, Schweißen, etc.).

Bevorzugt ist der Stift mit dem ersten Verbindungselement über eine Schweißverbindung oder durch Hartlöten verbunden. Bevorzugt kann zum Herstellen der Schweißverbindung ein elektrisches Punktschweißen eingesetzt werden.

Insbesondere dient die kraftschlüssige Verbindung zur Positionierung des ersten Verbindungselements an den Stiften, wobei durch die stoffschlüssige Verbindung die sichere elektrische Kontaktierung erzeugt wird.

Das erste Verbindungselement ist insbesondere durch Stanzen (bzw. Trennen) und Biegen (also Umformen) hergestellt. Bevorzugt ist das erste Verbindungselement ein Blechteil. Es sind selbstverständlich auch andere Herstellungsverfahren einsetzbar.

Insbesondere sind das Motormodul und das Steuerungsmodul und damit die erste Verbindung in einem gemeinsamen Gehäuse angeordnet, wobei das Gehäuse durch einen Deckel verschließbar und damit die erste Verbindung von einer das Gehäuse umgebenden Umgebung trennbar ist.

Insbesondere werden also Motormodul und Steuerungsmodul ggf. separat voneinander hergestellt und jeweils als UZSB bereitgestellt. Nach der Anordnung in einem gemeinsamen Gehäuse bzw. in einer zueinander fixierten Lage kann die elektrische erste Verbindung durch das erste Verbindungselement (das entlang der zweiten axialen Richtung auf die Stifte aufgeschoben wird) hergestellt werden. Das Gehäuse kann dann durch einen Deckel (z. B. aus Kunststoff oder Aluminium) gegenüber der Umgebung verschlossen werden. Vor der Anordnung des Deckels kann das erste Verbindungselement mit den Stiften stoffschlüssig verbunden werden.

Es wird weiter ein einteiliges (erstes) Verbindungselement vorgeschlagen, geeignet zur Herstellung einer elektrisch leitenden Verbindung zwischen zwei Stiften der beschriebenen Antriebseinheit (bzw. von anderen Komponenten).

Es wird weiter ein Verfahren zur Herstellung einer elektrisch leitenden (ersten) Verbindung zwischen zwei Stiften der beschriebenen Antriebseinheit gemäß Anspruch 7 vorgeschlagen. Das Verfahren umfasst zumindest die folgenden Schritte:
a) Bereitstellen eines Steuerungsmoduls mit einem ersten Steuerungsmodulstift und eines Motormoduls mit einem ersten Motormodulstift; wobei sich der erste Motormodulstift ausgehend von einer Anbindung am Motormodul entlang einer ersten axialen Richtung bis zu einem ersten Motormodulstiftende erstreckt; wobei sich der erste Steuerungsmodulstift von einer Anbindung am Steuerungsmodul entlang der ersten axialen Richtung bis zu einem ersten Steuerungsmodulstiftende erstreckt;
b) Bereitstellen des beschriebenen elektrisch leitenden, einteiligen (ersten) Verbindungselements, das dazu eingerichtet ist den ersten Motormodulstift mit dem ersten Steuermodulstift zu verbinden;
c) Aufschieben des (ersten) Verbindungselements entlang einer zweiten axialen Richtung auf die Stifte und Ausbilden einer kraftschlüssigen Verbindung zwischen zumindest einem Stift und dem ersten Verbindungselement, die gegenüber einer Verschiebung entlang der ersten axialen Richtung wirkt; und Ausbilden einer elektrisch leitenden, stoffschlüssigen Verbindung zwischen zumindest einem Stift und dem ersten Verbindungselement.

Insbesondere wird nach Schritt c) das erste Verbindungselement zumindest mit einem Stift stoffschlüssig verbunden.

Die Ausführungen zu der Antriebseinheit gelten insbesondere gleichermaßen für das Verbindungselement und das Verfahren und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine bekannte elektrische Verbindung;
- Fig. 2:: eine bekannte Antriebseinheit mit der elektrischen Verbindung nach Fig. 1;
- Fig. 3:: eine Antriebseinheit in einer Seitenansicht;
- Fig. 4:: ein Detail der Antriebseinheit nach Fig. 3 in einer perspektivischen Ansicht;
- Fig. 5:: ein erstes Verbindungselement und ein zweites Verbindungselement der Antriebseinheit nach Fig. 3 und 4 in einer perspektivischen Ansicht;
- Fig. 6:: das erste Verbindungselement nach dem Trennen und vor dem Umformen, in einer Seitenansicht;
- Fig. 7:: einen Teil der ersten elektrischen Verbindung gemäß Fig. 3 und 4 in einer Seitenansicht;
- Fig. 8:: das erste Verbindungselement nach Fig. 5 in einer ersten Seitenansicht;
- Fig. 9:: das erste Verbindungselement nach Fig. 8 in einer zweiten Seitenansicht; und
- Fig. 10:: das erste Verbindungselement nach Fig. 8 und 9 in einer Ansicht entlang der axialen Richtung.

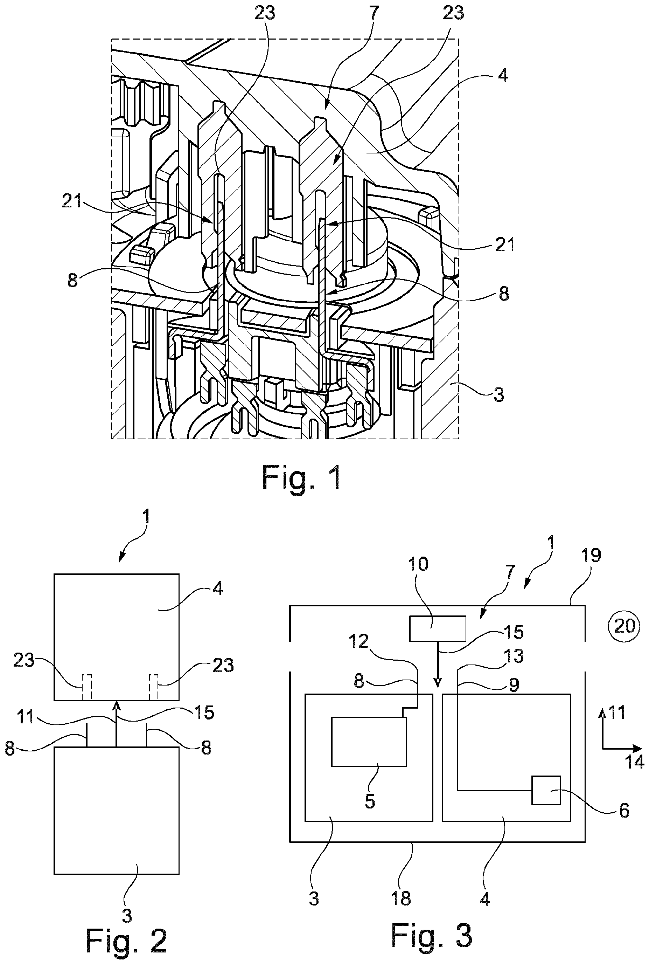

Fig. 1 zeigt eine bekannte elektrische Verbindung 7. Dabei ist bekannt, dass beim Fügen von Gehäuseteilen (in dem einen Teil ist das Steuerungsmodul 4 und in dem anderen das Motormodul 3 angeordnet) elektrische Verbindungen 7 zwischen Motormodul 3 und Steuerungsmodul 4 hergestellt werden. Dabei werden die Verbindungen 7 durch zwei Motormodulstifte 8 und auf der gegenüberliegenden Seite durch zwei gabelförmige Stiftaufnahmen 23 gebildet. Im Zuge des Zusammenführens der Gehäuseteile wird jeder Stift 8 in jeweils eine Stiftaufnahme 23 eingeführt. Stift 8 und Stiftaufnahme 23 bilden dabei eine kraftschlüssige Verbindung 21.

Fig. 2 zeigt eine bekannte Antriebseinheit 1 mit der elektrischen Verbindung nach Fig. 1. Die Antriebseinheit 1 umfasst ein Motormodul 3 und ein Steuerungsmodul 4. Im Zuge des Zusammenführens der Gehäuseteile entlang der axialen Richtung 11, 15 wird jeder Stift 8 in jeweils eine Stiftaufnahme 23 eingeführt. Stift 8 und Stiftaufnahme 23 bilden dabei eine kraftschlüssige Verbindung 21.

Fig. 3 zeigt eine Antriebseinheit 1 in einer Seitenansicht. Das Motormodul 3 weist einen elektrischen Antrieb 5 mit einem Stator und einem Rotor auf. Das Steuerungsmodul 4 weist eine Leistungskomponente 6 zur Steuerung des Antriebs 5 auf. Das Motormodul 3 und das Steuerungsmodul 4 sind über mindestens eine elektrisch leitende erste Verbindung 7 miteinander verbunden. Die erste Verbindung 7 ist durch einen ersten Motormodulstift 8 und einen ersten Steuerungsmodulstift 9 sowie ein den ersten Motormodulstift 8 mit dem ersten Steuerungsmodulstift 9 elektrisch leitend verbindendes, einteiliges erstes Verbindungselement 10 gebildet. Der erste Motormodulstift 8 erstreckt sich ausgehend von einer Anbindung am Motormodul 3 entlang einer ersten axialen Richtung 11 bis zu einem ersten Motormodulstiftende 12. Der erste Steuerungsmodulstift 9 erstreckt sich von einer Anbindung am Steuerungsmodul 4 entlang der ersten axialen Richtung 11 bis zu einem ersten Steuerungsmodulstiftende 13. Das erste Verbindungselement 10 erstreckt sich zur Verbindung der Stifte 8, 9 zumindest entlang einer radialen Richtung 14, quer zur ersten axialen Richtung 11.

Der Steuerungsmodulstift 8 und der Motormodulstift 9 sind in der radialen Richtung 14 nebeneinander angeordnet. Motormodul 3 und Steuerungsmodul 4 sind in der radialen Richtung 14 unmittelbar nebeneinander und in einem gemeinsamen Gehäuse 18 angeordnet. Die Stifte 8, 9 erstrecken sich im Wesentlichen parallel zueinander und ausgehend von der jeweiligen Anbindung entlang der gleichen ersten axialen Richtung 11 zu dem jeweiligen Stiftende 12, 13.

Die Stifte 8, 9 der elektrischen ersten Verbindung 7 sind in der radialen Richtung 14 beabstandet voneinander angeordnet. Dieser Abstand wird durch das erste Verbindungselement 10 überbrückt.

Das erste Verbindungselement 10 kontaktiert elektrisch leitend den Steuerungsmodulstift 9 und den Motormodulstift 8 und bildet so die elektrisch leitende erste Verbindung 7.

Das erste Verbindungselement 10 ist zur Herstellung der ersten Verbindung 7 entlang einer zweiten axialen Richtung 15 (verläuft entgegengesetzt zur ersten axialen Richtung 11) auf die Stifte 8, 9 aufschiebbar.

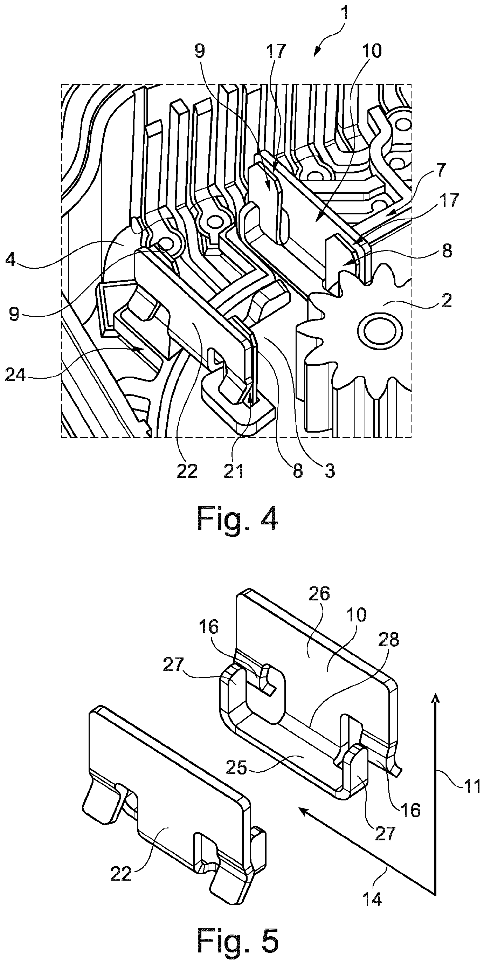

Fig. 4 zeigt ein Detail der Antriebseinheit 1 nach Fig. 3 in einer perspektivischen Ansicht. Auf die Ausführungen zu Fig. 3 wird verwiesen.

Die Antriebseinheit 1 dient dem Antrieb eines Aktuators 2, hier symbolisiert durch das dargestellte Zahnrad. Es sind zwei elektrische Verbindungen 7, 24 vorgesehen, die jeweils durch einen Motormodulstift 8 und einen Steuerungsmodulstift 9 gebildet werden. Die erste elektrische Verbindung 7 umfasst ein erstes Verbindungselement 10. Die zweite elektrische Verbindung 24 umfasst ein zweites Verbindungselement 22.

Die Verbindungselemente 10, 22 sind mit den Stiften 8, 9 jeweils über elastisch verformbare Kontaktelemente 16 der Verbindungselemente 10, 22 elektrisch leitend und kraftschlüssig verbunden.

Die Verbindungselemente 10, 22 sind gegenüber der radialen Richtung 14 formschlüssig mit beiden Stiften 8, 9 verbunden.

Die kraftschlüssigen Verbindungen 21 wirken gegenüber einer Verschiebung entlang der axialen Richtung 11, 15. Die formschlüssigen Verbindungen wirken gegenüber jeder radialen Richtung 14.

Die Stifte 8, 9 sind zusätzlich über stoffschlüssige Verbindungen 17 mit dem jeweiligen Verbindungselement 10, 22 elektrisch leitend verbunden.

Fig. 5 zeigt ein erstes Verbindungselement 10 und ein zweites Verbindungselement 22 der Antriebseinheit 1 nach Fig. 3 und 4 in einer perspektivischen Ansicht. Auf die Ausführungen zu Fig. 4 wird verwiesen.

Jedes Verbindungselement 10, 22 weist einen Fußbereich 25 und einen mit dem Fußbereich 25 über einen Steg 28 verbundenen Verbindungsbereich 26 auf. An dem Verbindungsbereich 26 schließen sich die Kontaktbereiche 16 an. An den Fußbereich 25 schließen sich zwei Anschläge 27 an. Wenn das Verbindungselement 10, 22 auf die Stifte 8, 9 aufgeschoben wird, erstrecken sich die Stifte 8, 9 zwischen Anschlag 27 und Kontaktbereich 16. Die Kontaktbereiche 16 werden elastisch in der radialen Richtung 14 verformt, so dass eine kraftschlüssige Verbindung 21 zwischen Stift 8, 9 und Kontaktbereich 16 sowie Anschlag 27 gebildet wird. Der Fußbereich 25 kontaktiert das Motormodul 3 und/oder das Steuerungsmodul 4. An dem Verbindungsbereich 26 können stoffschlüssige Verbindungen 17 zwischen Stift 8, 9 und Verbindungselement 10, 22 ausgebildet werden.

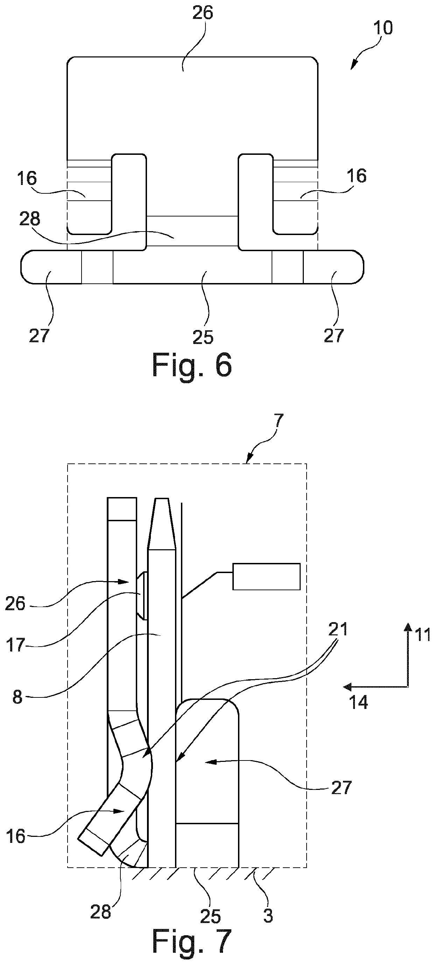

Fig. 6 zeigt das erste Verbindungselement 10 nach dem Trennen und vor dem Umformen, in einer Seitenansicht. Auf die Ausführungen zu Fig. 5 wird Bezug genommen.

Das erste Verbindungselement 10 weist einen Fußbereich 25 und einen mit dem Fußbereich 25 über einen Steg 28 verbundenen Verbindungsbereich 26 auf. An dem Verbindungsbereich 26 schließen sich die Kontaktbereiche 16 an. An den Fußbereich 25 schließen sich zwei Anschläge 27 an. Wenn das Verbindungselement 10, 22 auf die Stifte 8, 9 aufgeschoben wird, erstrecken sich die Stifte 8, 9 zwischen Anschlag 27 und Kontaktbereich 16. Die an dem ersten Verbindungselement 10 gezeigten Linien stellen die späteren Biegelinien dar.

Fig. 7 zeigt einen Teil der ersten elektrischen Verbindung 7 gemäß Fig. 3 und 4 in einer Seitenansicht. Auf die Ausführungen zu Fig. 3 und 4 wird Bezug genommen.

Wenn das erste Verbindungselement 10 auf die Stifte 8, 9 aufgeschoben wird, erstrecken sich die Stifte 8, 9 zwischen Anschlag 27 und Kontaktbereich 16. Die Kontaktbereiche 16 werden elastisch in der radialen Richtung 14 verformt, so dass eine kraftschlüssige Verbindung 21 zwischen Stift 8, 9 und Kontaktbereich 16 sowie Anschlag 27 gebildet wird. Der Fußbereich 25 kontaktiert das Motormodul 3 und/oder das Steuerungsmodul 4. An dem Verbindungsbereich 26 können stoffschlüssige Verbindungen 17 zwischen Stift 8, 9 und erstem Verbindungselement 10 ausgebildet werden.

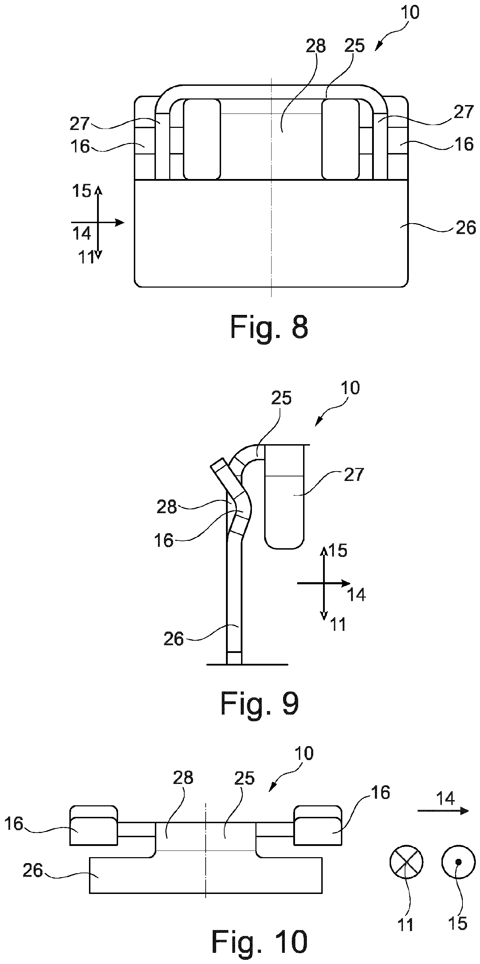

Fig. 8 zeigt das erste Verbindungselement 7 nach Fig. 5 in einer ersten Seitenansicht. Fig. 9 zeigt das erste Verbindungselement 7 nach Fig. 8 in einer zweiten Seitenansicht. Fig. 10 zeigt das erste Verbindungselement 7 nach Fig. 8 und 9 in einer Ansicht entlang der axialen Richtung 11, 15. Die Fig. 8 bis 10 werden im Folgenden gemeinsam beschrieben. Auf die Ausführungen zu Fig. 5 wird verwiesen.

Jedes Verbindungselement 10, 22 weist einen Fußbereich 25 und einen mit dem Fußbereich 25 über einen Steg 28 verbundenen Verbindungsbereich 26 auf. An dem Verbindungsbereich 26 schließen sich die Kontaktbereiche 16 an. An den Fußbereich 25 schließen sich zwei Anschläge 27 an.

### Bezugszeichenliste

- 1: Antriebseinheit
- 2: Aktuator
- 3: Motormodul
- 4: Steuerungsmodul
- 5: Antrieb
- 6: Leistungskomponente
- 7: erste Verbindung
- 8: erster Motormodulstift
- 9: erster Steuerungsmodulstift
- 10: erstes Verbindungselement
- 11: erste axiale Richtung
- 12: erstes Motormodulstiftende
- 13: erstes Steuerungsmodulstiftende
- 14: radiale Richtung
- 15: zweite axiale Richtung
- 16: Kontaktelement
- 17: stoffschlüssige Verbindung
- 18: Gehäuse
- 19: Deckel
- 20: Umgebung
- 21: kraftschlüssige Verbindung
- 22: zweites Verbindungselement
- 23: Stiftaufnahme
- 24: zweite elektrische Verbindung
- 25: Fußbereich
- 26: Verbindungsbereich
- 27: Anschlag
- 28: Steg

## Patentansprüche

1. Antriebseinheit (1) für einen Aktuator (2), zumindest umfassend ein Motormodul (3) und ein Steuerungsmodul (4), wobei das Motormodul (3) zumindest einen elektrischen Antrieb (5) und das Steuerungsmodul (4) zumindest eine Leistungskomponente (6) zur Steuerung des Antriebs (5) aufweist; wobei das Motormodul (3) und das Steuerungsmodul (4) zumindest über mindestens eine elektrisch leitende erste Verbindung (7) miteinander verbunden sind; wobei die erste Verbindung (7) durch einen ersten Motormodulstift (8) und einen ersten Steuerungsmodulstift (9) sowie ein den ersten Motormodulstift (8) mit dem ersten Steuerungsmodulstift (9) elektrisch leitend verbindendes, einteiliges erstes Verbindungselement (10) gebildet ist; wobei sich der erste Motormodulstift (8) ausgehend von einer Anbindung am Motormodul (3) entlang einer ersten axialen Richtung (11) bis zu einem ersten Motormodulstiftende (12) erstreckt; wobei sich der erste Steuerungsmodulstift (9) von einer Anbindung am Steuerungsmodul (4) entlang der ersten axialen Richtung (11) bis zu einem ersten Steuerungsmodulstiftende (13) erstreckt; wobei sich das erste Verbindungselement (10) zur Verbindung der Stifte (8, 9) zumindest entlang einer radialen Richtung (14), quer zur ersten axialen Richtung (11), erstreckt; wobei zumindest einer der Stifte (8, 9) über ein elastisch verformbares Kontaktelement (16) mit dem ersten Verbindungselement (10) elektrisch leitend und kraftschlüssig verbunden ist und die kraftschlüssige Verbindung (21) gegenüber einer Verschiebung entlang der ersten axialen Richtung (11) wirkt; und wobei zumindest einer der Stifte (8, 9) über eine stoffschlüssige Verbindung (17) mit dem ersten Verbindungselement (10) elektrisch leitend verbunden ist.

2. Antriebseinheit (1) nach Patentanspruch 1, wobei das erste Verbindungselement (10) zur Herstellung der ersten Verbindung (7) entlang einer zweiten axialen Richtung (15) auf die Stifte (8, 9) aufschiebbar ist.

3. Antriebseinheit (1) nach Patentanspruch 1 oder 2, wobei das erste Verbindungselement (10) das Kontaktelement (16) aufweist.

4. Antriebseinheit (1) nach einem der vorhergehenden Patentansprüche, wobei das erste Verbindungselement (10) gegenüber der radialen Richtung (14) formschlüssig mit beiden Stiften (8, 9) verbunden ist.

5. Antriebseinheit (1) nach einem der vorhergehenden Patentansprüche, wobei das erste Verbindungselement (10) durch Stanzen und Biegen hergestellt ist.

6. Antriebseinheit (1) nach einem der vorhergehenden Patentansprüche, wobei das Motormodul (3) und das Steuerungsmodul (4) und damit die erste Verbindung (7) in einem gemeinsamen Gehäuse (18) angeordnet sind, wobei das Gehäuse (18) durch einen Deckel (19) verschließbar und damit die erste Verbindung (7) von einer das Gehäuse (18) umgebenden Umgebung (20) trennbar ist.

7. Verfahren zur Herstellung einer elektrisch leitenden Verbindung (7) zwischen zwei Stiften (8, 9) einer Antriebseinheit (1) nach einem der vorhergehenden Patentansprüche 1 bis 6; zumindest aufweisend die folgenden Schritte:
a) Bereitstellen eines Motormoduls (3) mit einem ersten Motormodulstift (8) und eines Steuerungsmoduls (4) mit einem ersten Steuerungsmodulstift (9); wobei sich der erste Motormodulstift (8) ausgehend von einer Anbindung am Motormodul (3) entlang einer ersten axialen Richtung (11) bis zu einem ersten Motormodulstiftende (12) erstreckt; wobei sich der erste Steuerungsmodulstift (9) von einer Anbindung am Steuerungsmodul (4) entlang der ersten axialen Richtung (11) bis zu einem ersten Steuerungsmodulstiftende (13) erstreckt;
b) Bereitstellen eines elektrisch leitenden, einteiligen Verbindungselements (10), das dazu eingerichtet ist den ersten Motormodulstift (8) über ein elastisch verformbares Kontaktelement (16) mit dem ersten Steuerungsmodulstift (9) zu verbinden;
c) Aufschieben des Verbindungselements (10) entlang einer zweiten axialen Richtung (15) auf die Stifte (8, 9) und Ausbilden einer kraftschlüssigen Verbindung (21) zwischen zumindest einem Stift (8, 9) und dem Verbindungselement (10), die gegenüber einer Verschiebung entlang der ersten axialen Richtung (11) wirkt; und
d) Ausbilden einer elektrisch leitenden, stoffschlüssigen Verbindung (17) zwischen zumindest einem Stift (8, 9) und dem ersten Verbindungselement (10).

## Claims

1. Drive unit (1) for an actuator (2), at least comprising a motor module (3) and a control module (4), the motor module (3) having at least one electric drive (5) and the control module (4) having at least one power component (6) for controlling the drive (5); the motor module (3) and the control module (4) being connected to one another at least via at least one electrically conducting first connection (7); the first connection (7) being formed by way of a first motor module pin (8), a first control module pin (9), and a single-piece first connecting element (10) which connects the first motor module pin (8) to the first control module pin (9) in an electrically conducting manner; the first motor module pin (8) extending, starting from an attachment on the motor module (3), along a first axial direction (11) as far as a first motor module pin end (12); the first control module pin (9) extending from an attachment on the control module (4) along the first axial direction (11) as far as a first control module pin end (13); the first connecting element (10) for connecting the pins (8, 9) extending at least along a radial direction (14), transversely with respect to the first axial direction (11); at least one of the pins (8, 9) being connected in an electrically conducting and non-positive manner via an elastically deformable contact element (16) to the first connecting element (10) and the non-positive connection (21) acting counter to a displacement along the first axial direction (11); and at least one of the pins (8, 9) being connected in an electrically conducting manner via an integrally joined connection (17) to the first connecting element (10).

2. Drive unit (1) according to Patent Claim 1, it being possible, in order to produce the first connection (7), for the first connecting element (10) to be pushed onto the pins (8, 9) along a second axial direction (15).

3. Drive unit (1) according to Patent Claim 1 or 2, the first connecting element (10) having the contact element (16) .

4. Drive unit (1) according to one of the preceding patent claims, the first connecting element (10) being connected in a positively locking connection to the two pins (8, 9) with respect to the radial direction (14).

5. Drive unit (1) according to one of the preceding patent claims, the first connecting element (10) being produced by way of punching and bending.

6. Drive unit (1) according to one of the preceding patent claims, the motor module (3) and the control module (4) and therefore the first connection (7) being arranged in a common housing (18), it being possible for the housing (18) to be closed by way of a cover (19) and it therefore being possible for the first connection (7) to be separated from a surrounding area (20) which surrounds the housing (18).

7. Method for producing an electrically conducting connection (7) between two pins (8, 9) of a drive unit (1) according to one of the preceding Patent Claims 1 to 6; at least having the following steps:
a) providing of a motor module (3) with a first motor module pin (8) and of a control module (4) with a first control module pin (9); the first motor module pin (8) extending, starting from an attachment on the motor module (3), along a first axial direction (11) as far as a first motor module pin end (12); the first control module pin (9) extending from an attachment on the control module (4) along the first axial direction (11) as far as a first control module pin end (13);
b) providing of an electrically conducting, single-piece connecting element (10) which is set up to connect the first motor module pin (8) via an elastically deformable contact element (16) to the first control module pin (9);
c) pushing of the connecting element (10) along a second axial direction (15) onto the pins (8, 9) and configuring of a non-positive connection (21) between at least one pin (8, 9) and the connecting element (10), which non-positive connection (21) acts counter to a displacement along the first axial direction (11); and
d) configuring of an electrically conducting, integrally joined connection (17) between at least one pin (8, 9) and the first connecting element (10) .

## Revendications

1. Unité d'entraînement (1) pour un actionneur (2), comprenant au moins un module de moteur (3) et un module de commande (4), le module de moteur (3) présentant au moins un dispositif d'entraînement électrique (5) et le module de commande (4) présentant au moins un composant de puissance (6) pour commander le dispositif d'entraînement (5) ; le module de moteur (3) et le module de commande (4) étant reliés l'un à l'autre au moins par au moins une première liaison (7) électriquement conductrice ; la première liaison (7) étant formée par une première broche de module de moteur (8) et une première broche de module de commande (9) ainsi que par un premier élément de liaison (10) d'une seule pièce, reliant de manière électriquement conductrice la première broche de module de moteur (8) à la première broche de module de commande ; la première broche de module de moteur (3) s'étendant en partant d'une attache sur le module de moteur (3) le long d'une première direction axiale (11) jusqu'à une première extrémité de broche de module de moteur (12) ; la première broche de module de commande (9) s'étendant d'une attache sur le module de commande (4) le long de la première direction axiale (11) jusqu'à une première extrémité de broche de module de commande (13) ; le premier élément de liaison (10) s'étendant au moins le long d'une direction radiale (14) transversalement à la première direction axiale (11) pour relier les broches (8, 9) ; au moins l'une des broches (8, 9) étant reliée de manière électriquement conductrice et par adhérence au premier élément de liaison (10) par l'intermédiaire d'un élément de contact (16) élastiquement déformable, et la liaison par adhérence (21) agissant à l'encontre d'un décalage le long de la première direction axiale (11) ; et au moins l'une des broches (8, 9) étant reliée de manière électriquement conductrice au premier élément de liaison (10) par l'intermédiaire d'une liaison par coopération de matières (17).

2. Unité d'entraînement (1) selon la revendication 1, dans laquelle le premier élément de liaison (10) peut être poussé sur les broches (8, 9) le long d'une deuxième direction axiale (15) pour établir la première liaison (7).

3. Unité d'entraînement (1) selon la revendication 1 ou 2, dans laquelle le premier élément de liaison (10) présente l'élément de contact (16).

4. Unité d'entraînement (1) selon l'une quelconque des revendications précédentes, dans laquelle le premier élément de liaison (10) est relié aux deux broches (8, 9) par complémentarité de forme par rapport à la direction radiale (14).

5. Unité d'entraînement (1) selon l'une quelconque des revendications précédentes, dans laquelle le premier élément de liaison (10) est fabriqué par découpage et pliage.

6. Unité d'entraînement (1) selon l'une quelconque des revendications précédentes, dans laquelle le module de moteur (3) et le module de commande (4), et donc la première liaison (7), sont disposés dans un même carter (18), dans laquelle le carter (18) peut être fermé par un couvercle (19), et la première liaison (7) peut donc être séparée d'un environ (20) entourant le carter (18) .

7. Procédé de fabrication d'une liaison électriquement conductrice (7) entre deux broches (8, 9) d'une unité d'entraînement (1) selon l'une quelconque des revendications précédentes 1 à 6 ; présentant au moins les étapes suivantes consistant à :
a) fournir un module de moteur (3) doté d'une première broche de module de moteur (8) et un module de commande (4) doté d'une première broche de module de commande (9) ; la première broche de module de moteur (8) s'étendant en partant d'une attache sur le module de moteur (3) le long d'une première direction axiale (11) jusqu'à une première extrémité de broche de module de moteur (12) ; la première broche de module de commande (9) s'étendant d'une attache sur le module de commande (4) le long de la première direction axiale (11) jusqu'à une première extrémité de broche de module de commande (13) ;
b) fournir un élément de liaison (10) d'une seule pièce, électriquement conducteur, qui est aménagé pour relier la première broche de module de moteur (8) à la première broche de module de commande (9) par l'intermédiaire d'un élément de contact (16) élastiquement déformable ;
c) pousser l'élément de liaison (10) sur les broches (8, 9) le long d'une deuxième direction axiale (15) et réaliser une liaison par adhérence (21) entre au moins une broche (8, 9) et l'élément de liaison (10), qui agit à l'encontre d'un décalage le long de la première direction axiale (11) ; et
d) réaliser une liaison par coopération de matières (17), électriquement conductrice, entre au moins une broche (8, 9) et le premier élément de liaison (10).
